# DEMANDE DE BREVET EUROPEEN

(11) **EP 0 816 064 A1**
(43) Date de publication de la demande: **07.01.1998**
(21) Numéro de dépôt: 97401468.0
(22) Date de dépôt: 24.06.1997
(51) Int. Cl.: B32B 17/10, B29C 45/14, C03C 27/12

(54) **Vitrage composite en verre et matière plastique et procédé de détermination des paramètres géométriques optimaux de ce vitrage**

(30) Priorité: 25.06.1996 FR 9607860; 18.02.1997 FR 9701893
(71) Demandeur: SAINT-GOBAIN VITRAGE, 92400 Courbevoie (FR)
(72) Inventeur: Bravet, Jean-Louis, 60150 Thourotte (FR); Bureau, Bernard, 60490 Marqueglise (FR); Morin, Claude, 92800 Puteaux (FR); Padoy, Christian, 95500 Gonesse (FR); Vidal, Boris, 60150 Giraumont (FR)
(74) Mandataire: Ohayon, Joseph

(57) **Abrégé**

L'invention concerne un vitrage composite du type comprenant deux feuilles de verre et une couche intercalaire en matière plastique transparente de plus grande épaisseur que l'épaisseur des feuilles de verre, caractérisé en ce que la matière plastique est apte à adhérer au verre.

Le vitrage a une épaisseur totale inférieure à 5 mm, un rapport de l'épaisseur de la couche intercalaire à l'épaisseur des feuilles de verre compris entre 1 et 10, une masse surfacique inférieure à 6 kg/m² et un module de Young supérieur à 30GPa pour une épaisseur totale de vitrage de 3 mm.

## Description

La présente invention concerne un vitrage composite en verre et matière plastique, utilisable notamment dans l'industrie automobile pour réaliser des pare-brises et des vitres latérales.

On sait que les vitrages de voitures automobiles doivent avoir à la fois de bonnes qualités optiques, telles que la transparence et la non-rayabilité et de bonnes qualités mécaniques telles que la résistance vis-à-vis des chocs et un faible poids.

Par le brevet WO 96/12604 on connaît un vitrage composite selon le préambule de la revendication 1. Toutefois, en raison de leur très faible épaisseur, les couches de verre utilisées sont incapables de conférer au vitrage la résistance aux chocs et la rigidité de flexion requises par les vitrages des voitures automobiles. Les couches de verre n'ont pour seul rôle que celui de protéger la couche intercalaire en matière plastique contre les rayures.

Le brevet US 4 600 640 concerne un vitrage composite formé d'une couche de polycarbonate, d'une couche adhésive et d'une mince feuille de verre ayant une épaisseur de l'ordre de 0,1 mm. Ici aussi, le but recherché est celui de protéger la couche de matière plastique contre les rayures. Le vitrage ne convient donc pas pour réaliser des pare-brise de voitures automobiles. De plus, ce brevet ne donne aucune information sur l'épaisseur de la couche adhésive. Or, la couche d'adhésif risque de perturber sensiblement la rigidité d'autant plus que le coefficient de dilatation du verre étant sept fois plus petit que celui du polycarbonate, il faudrait utiliser une épaisseur importante de colle apte à encaisser les écarts de dilatation et cette colle en épaisseur importante dégradera la rigidité du vitrage et ses performances mécaniques.

Le brevet GB 1 184 042 décrit lui aussi un vitrage composite comprenant deux couches de verre extrêmement minces ayant une fonction anti-rayure. Ces couches de verre sont incapables d'apporter la moindre rigidité au vitrage.

Les brevets CH 427 234 et DE 94 03 934 concernent chacun un vitrage composite ayant deux couches de verre nettement plus épaisses que dans les vitrages précédents, mais ici aussi il n'y a pas de recherche de performances mécaniques.

La présente invention vise à remédier aux inconvénients des vitrages de la technique antérieure et a donc pour objet un vitrage composite verre et matière plastique ayant de bonnes performances mécaniques, telles qu'une bonne résistance de flexion et une faible masse surfacique.

L'invention concerne à cet effet un vitrage composite selon la partie caractérisante de la revendication 1.

Dans le vitrage selon l'invention, les feuilles de verre sont suffisamment épaisses pour créer, par l'association avec la matière plastique, un effet de poutre qui confère au vitrage une bonne résistance de flexion.

L'invention a également pour objet un vitrage composite tel que, lorsque les feuilles de verre se brisent par suite d'un choc, les débris de verre restent collés à la couche de matière plastique intercalaire et ne s'échappent pas de la feuillure dans laquelle le vitrage est fixé. Le vitrage pourra ainsi conserver sa rigidité et empêcher l'éjection des passagers au travers.

Pour faciliter ou renforcer l'adhésion de la matière plastique aux feuilles de verre, on peut utiliser un promoteur d'adhérence qui est déposé sur le verre ou introduit dans la matière plastique.

L'expérience a montré que l'adhésion entre verre et matière plastique doit être telle que la résistance à l'arrachement est au moins de 20 N/cm pour une bande de 1 cm de large. Cette résistance peut, dans certains cas, être obtenue sans promoteur d'adhérence; dans d'autres cas, on aura recours à un promoteur d'adhérence déposé sur le verre et/ou intorduit dans la matière plastique.

L'invention concerne également, à titre de produit industriel nouveau, des ensembles incorporant le vitrage décrit précédemment, par exemple des éléments de carrosserie, tels que des hayons ou des panneaux comprenant une zone transparente constituée par un vitrage selon l'invention et des zones non nécessairement transparentes, peintes ou brutes de démoulage, réalisées dans la même matière plastique que celle entrant dans la composition du vitrage ou dans une autre matière plastique et possédant éventuellement d'autre propriétés, notamment la transparence et éventuellement une plus grande rigidité. Ces autres zones extérieures à la zone vitrage peuvent être réalisées au cours de la même opération de moulage qui permet de fabriquer le vitrage, et dans le même moule, ou au contraire, il peut s'agir d'une opération de moulage en deux temps, soit dans le même moule, soit en reprise dans un second moule.

On peut également réaliser un ensemble comprenant essentiellement le vitrage, celui-ci étant simplement équipé à sa périphérie de rebords, d'un cadre notamment constituant ainsi un vitrage encapsulé ou d'appendices divers.

Ces éléments peuvent être faits en matière plastique injectée, mais peuvent aussi comprendre des ajouts, ou des inserts, tels que des enjoliveurs, des accessoires destinés à remplir diverses fonctions (bloc optique de signalisation, troisième feu de stop associé à la lunette arrière de la voiture, passages de câbles électriques, tuyaux notamment pour lave-glace, élément profilé pour améliorer l'aérodynamisme, boîtier pour serrure, etc...).

Avant l'injection de la matière plastique, on dispose les inserts entre les deux feuilles de verre et les ajouts avec leurs appendices qui sont en saillie sont reçus dans des logements prévus à cet effet dans le moule. Les inserts et appendices se trouveront donc intégrés dans la masse du vitrage ou de l'ensemble comportant une zone transparente formant vitrage sans qu'il y ait eu besoin de percer ou d'usiner le vitrage.

La présente invention concerne encore un procédé permettant de déterminer les paramètres géométriques optimaux du vitrage composite pour qu'il ait une masse surfacique minimale tout en gardant un bon comportement mécanique vis-à-vis des chocs.

On sait en effet que la tendance est à la limitation des émissions de gaz polluants et par conséquent à la conception de composants allégés. On a en effet constaté qu'un allègement du poids du véhicule de 1 % fait baisser de 0,3 % l'émission de gaz carbonique, toutes choses étant égales par ailleurs. Cette tendance s'applique également aux vitrages.

Toutefois, la recherche d'un allègement à tout prix du vitrage peut s'accompagner d'une dégradation de sa rigidité de flexion et entraîner par voie de conséquence une diminution de la rigidité du véhicule.

On constate en effet que le remplacement pur et simple de feuilles de verre par des feuilles de polymères de faible poids, tels que polycarbonates, méthacrylates, polyéthylènes ionomères, polyuréthannes, avec conservation d'une rigidité suffisante pour satisfaire aux critères de bon comportement mécanique aux chocs, ne se traduit pas par un allégement. Ceci est dû au fait que le gain de masse spécifique des matières plastiques (qui est de l'ordre de deux fois plus petit que celui du verre) est plus que compensé par la perte de module de Young de ces matières plastiques.

La Demanderesse s'est intéressée au problème de la recherche systématique des vitrages composites verre et matière plastique, en vue de déterminer ceux qui, pour une rigidité de flexion donnée, ont la masse surfacique la plus faible.

En matière de vitrage pour l'industrie automobile, on connaît déjà le vitrage composite comprenant une épaisseur intercalaire de polyvinyl butyral (PVB) comprise entre deux feuilles de verre. Toutefois, on a constaté que pour obtenir une rigidité de flexion satisfaisante avec un tel vitrage, il fallait utiliser une très forte épaisseur de PVB, ce qui, malgré le faible poids spécifique de cette matière, conduit à un vitrage nettement plus lourd qu'un vitrage en verre monolithique ayant la même rigidité de flexion. Ceci est dû au fait que l'intercalaire en PVB, en raison de son faible module de compression, s'écrase quand on fléchit le vitrage et que l'effet de poutre conféré par l'intercalaire joue très peu.

Il faut donc tout d'abord déterminer les matières plastiques susceptibles de servir pour la réalisation d'un intercalaire dans un vitrage composite et déterminer pour chacune de ces matières plastiques, l'épaisseur de matière à introduire entre les deux feuilles de verre ainsi que l'épaisseur optimale de ces dernières pour obtenir, à rigidité de flexion constante, la masse surfacique la plus faible.

La Demanderesse a découvert que les matières plastiques qui devraient permettre d'obtenir une masse de vitrage composite inférieure à celles du verre monolithique sont celles qui ont un module de Young d'au moins égal à 20MPa, par exemple celle appartenant au groupe polyéthylène ionomère, polycarbonate, polyuréthanne.

L'invention a donc pour objet un procédé de détermination des paramètres géométriques du vitrage composite selon la revendication 6.

Le minima relevé sur la courbe correspond à la géométrie optimale du vitrage, en termes de masse surfacique. L'épaisseur des feuilles de verre de ce vitrage se lit au point minima de la courbe.

Une valeur avantageuse de ladite épaisseur de référence de la feuille de verre monolithique est de 3 mm, qui est l'épaisseur standard des vitrages de véhicules automobiles.

On peut tracer de la même façon pour chaque matière plastique sélectionnée, la courbe de variation de la masse surfacique en fonction de l'épaisseur de verre, dans les mêmes conditions que précédemment. On constate que la configuration optimale varie légèrement d'une matière plastique à l'autre.

L'invention sera décrite à présent en regard des dessins annexés dans lesquels :
la figure 1 représente un graphique montrant l'évolution de la masse surfacique de vitrages monolithiques et composites réalisés en un certain nombre de matériaux, en fonction de la rigidité de flexion de ces vitrages ;
la figure 2 représente un graphique montrant l'évolution de la masse surfacique de deux vitrages composites comprenant une couche intercalaire sélectionnée, en fonction de l'épaisseur des feuilles de verre.

Le vitrage feuilleté selon l'invention, non représenté, est formé de deux feuilles plates en verre comprenant entre elles une couche intercalaire en une matière plastique transparente. Le rapport de l'épaisseur de la couche intercalaire à celle d'une feuille de verre est compris entre 1 et au moins 5, voire 1 et 10.

La couche intercalaire peut être constituée en toute matière thermoplastique transparente adhérant au verre, par exemple en une résine ionomère, telle qu'un copolymère d'acide méthacrylique et de polyéthylène ou un copolymère d'acide acrylique et d'éthylène, neutralisé par une polyamine. Elle peut être constituée également en polyuréthanne, en polyuréthanne thermoplastique, en polyuréthanne RIM, en téréphtalate de polyéthylène, en un polyester ou en une résine acrylique ou acrylique modifiée ou une association de plusieurs épaisseurs d'une même ou de plusieurs de ces matières plastiques.

Dans son application particulière aux vitrages de véhicules automobiles, le vitrage selon l'invention devra avoir de préférence une épaisseur totale maximale de 5 mm, qui est l'épaisseur standard du logement prévu à cet effet dans les portières de véhicule. L'épaisseur de chaque feuille de verre est inférieure à 1,5 mm et de préférence inférieure à 1,2 mm et le module de Young d'un vitrage de 3 mm d'épaisseur totale est supérieur à 30 GPa.

On expliquera à présent le procédé qui a permis de déterminer les paramètres géométriques et mécaniques susmentionnés.

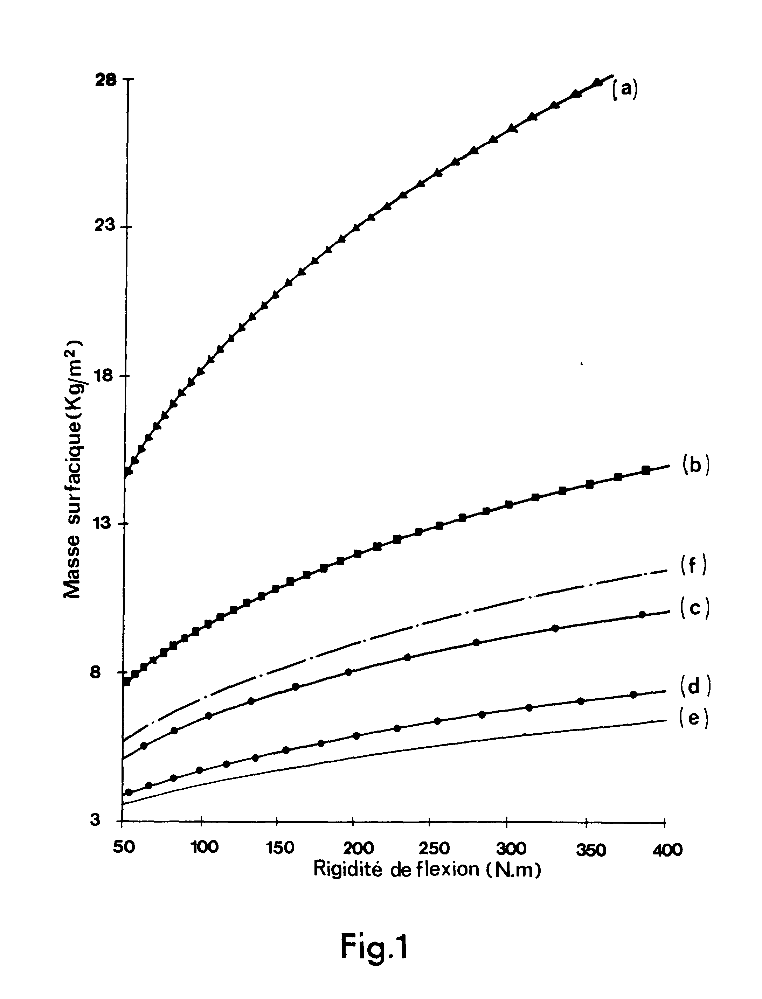

Avec référence à la figure 1, les courbes a, b et c représentent respectivement la rigidité de flexion d'une feuille monolithique de polyéthylène ionomère, d'une feuille monolithique de polycarbonate et d'une feuille monolithique de verre.

On voit sur ces courbes que pour obtenir une rigidité de flexion donnée, on doit utiliser des feuilles monolithiques de polyéthylène ionomère et de polycarbonate ayant des masses surfaciques respectives beaucoup plus importantes que celle de la feuille de verre ayant la même rigidité de flexion. Par exemple, pour une rigidité de flexion de 200 N.m les masses surfaciques sont les suivantes : 8 kg/m² pour le verre, 23 kg/m² pour le polymère ionomère et 11,5 kg/m² pour le polycarbonate.

Le polymère ionomère et le polycarbonate ne sont que deux exemples de matières plastiques ayant une bonne tenue aux chocs mécaniques. D'une façon générale, les matières plastiques qui possèdent cette propriété et qui peuvent être utilisées dans le cadre de la présente invention sont celles qui ont un module de Young au moins égal à 20 MPa.

La Demanderesse a montré qu'en utilisant ces matières comme couche intercalaire dans un vitrage composite, on peut obtenir des vitrages ayant une masse surfacique inférieure à celle des vitrages formés d'une feuille de verre monolithique, à rigidité de flexion constante.

Sur la figure 1, on a représenté également les courbes d et e de variation de la masse surfacique de vitrages composites formés de deux feuilles de verre monolithique de 0,5 mm d'épaisseur chacune, comprenant entre elles respectivement une couche de polycarbonate et une couche de polyéthylène ionomère. Les modules de Young de ces deux matières valent respectivement 80 et 160 MPa.

On note que les courbes d et e se trouvent sous la courbe c, ce qui signifie qu'à rigidité de flexion constante, les vitrages composites à intercalaire en polycarbonate et en polyéthylène ionomère sont plus légers qu'un vitrage en verre monolithique. Ainsi pour la valeur de la rigidité de flexion choisie précédemment, 200N.m, les masses surfaciques correspondant aux cas des courbes d et e sont respectivement de 5,8 et 5,1 kg/m², donc bien inférieures à celle de la feuille de verre monolithique.

On a également représenté sur la figure 1, la courbe f montrant l'évolution de la masse surfacique d'un vitrage composite formé d'une couche intercalaire en PVB de 0,76 mm d'épaisseur et de deux feuilles de verre, en fonction de l'épaisseur du verre, et cela à rigidité de flexion constante et équivalente à celle d'un verre monolithique de 3 mm. On voit que cette courbe est entièrement située au-dessus de la courbe c. Le PVB ne permet donc pas d'obtenir un allègement du vitrage.

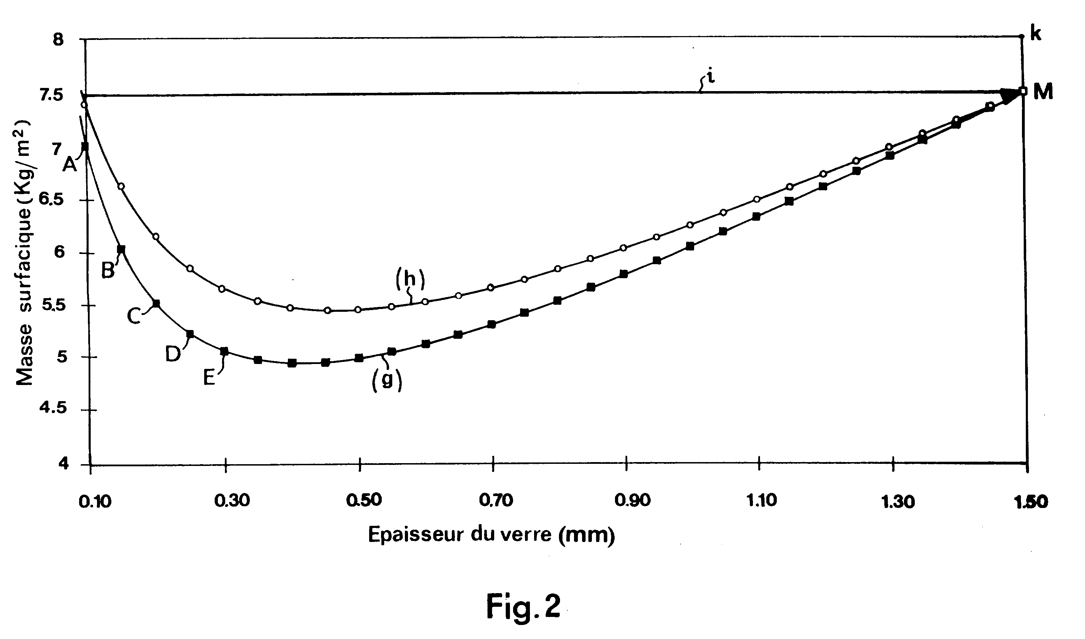

On se référera à présent à la figure 2 qui représente les courbes de variation de la masse surfacique, à rigidité constante, des matières plastiques sélectionnées sur la figure 1, en fonction de l'épaisseur des feuilles de verre, la rigidité de flexion étant maintenue constante et égale à celle d'une feuille de verre monolithique ayant une épaisseur de référence donnée. On choisira par exemple une épaisseur de référence de 3 mm (correspondant à une masse surfacique de 7,5 kg/m²). Pour obtenir cette rigidité de flexion, on introduit une épaisseur convenable d'intercalaire entre les deux feuilles de verre.

La figure 2 montre les courbes obtenues avec un intercalaire en polyéthylène ionomère (courbe g) et avec un intercalaire en polycarbonate (courbe h). On a représenté également sur la figure 2, la droite i qui correspond à la feuille de verre monolithique de 3 mm d'épaisseur.

Ces courbes ont été construites expérimentalement, point par point. On expliquera le mode de construction de l'une d'entre elles, par exemple la courbe g.

On fabrique un vitrage composite comprenant deux feuilles de verre monolithique ayant chacune une épaisseur de 0,10mm avec une couche intercalaire en polyéthylène ionomère dont l'épaisseur est telle que le vitrage composite obtenu ait une rigidité de flexion égale à celle d'une feuille de verre monolithique de 3 mm d'épaisseur, soit 160 N.m. Cette valeur de la rigidité de flexion se lit sur la courbe c de la figure 1. Elle correspond à une masse surfacique de 7,5 kg/m² (puisque la masse surfacique d'une feuille de verre de 1 mm d'épaisseur est de 2,5 kg/m²).

Le vitrage ainsi réalisé a pour masse surfacique 7 kg/m². Le point A de coordonnées 0,10 mm et 7 kg/m² est porté sur le système d'axes de coordonnées de la figure 2.

On place de la même façon les points B, C, D, E... correspondant aux épaisseurs 0,15 ; 0,20 ; 0,25 ; 0,30 mm... On obtient ainsi la courbe g. Par le même procédé, on trace la courbe h. On note que les courbes g et h passent par un minimum et par le point M de coordonnées 1,50 mm, 7,5 kg/m² (absence d'intercalaire).

Sur la figure 2, on a également figuré le point k qui correspond à un vitrage ayant un intercalaire en PVB.

Les minimas des courbes g et h correspondent aux configurations géométriques optimales. Celles-ci sont résumées sur le tableau suivant.

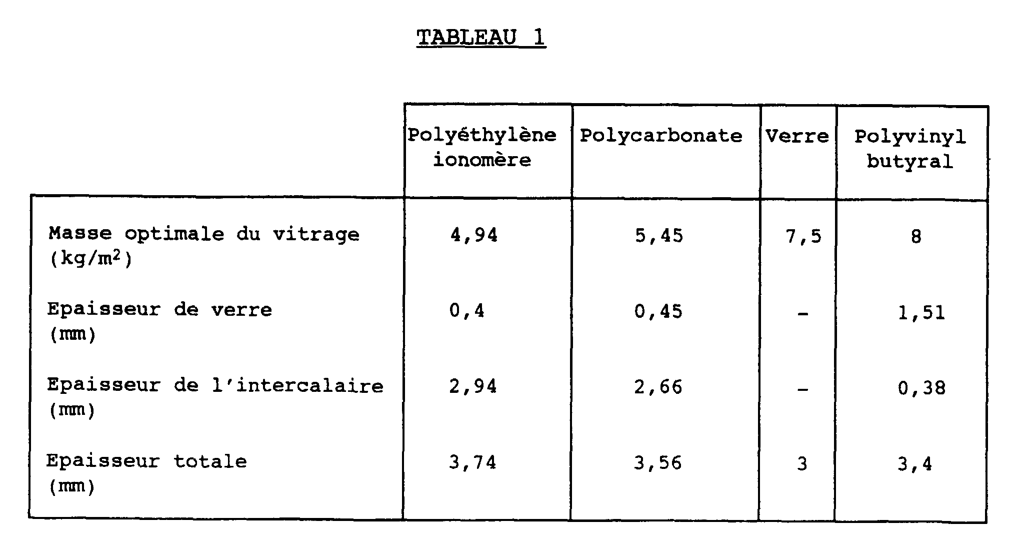

Par exemple, la configuraton optimale du vitrage selon la première colonne du tableau est :
verre 0,4 mm/polyéthylène ionomère 2,94 mm/ verre 0,4 mm.

Ce vitrage a une épaisseur totale de 3,74 mm et une masse surfacique de 4,94 kg/m² (0,8 x 2,5 + 1 x 2,94), ce qui représente un allègement d'environ 2,5 kg/m² par rapport à un vitrage en verre monolithique de 3 mm d'épaisseur (4,94 au lieu 7,5 kg/m²).

On voit également sur les courbes de la figure 2 que l'épaisseur de verre varie peu avec le matériau sélectionné. La plage optimale d'épaisseur de verre se situe autour de 0,5 mm. On pourra choisir la plage comprise dans l'intervalle 0,5 ± 0,1 mm si l'on veut profiter de l'allègement maximal.

Si l'on veut faire intervenir d'autres considérations dans le choix de la configuration, telle que la production dans des conditions de coût et de qualité acceptables ou la facilité d'assemblage des composants, sans pour autant sacrifier trop l'allégement du vitrage, on pourra se contenter d'une plage d'épaisseur plus importante, par exemple comprise dans l'intervalle 0,5 ± 0,2 mm ou même 0,5 ± 0,7 mm. En outre, les épaisseurs de verre encadrant l'âme en matière plastique pourront être dissymétriques. En particulier, pour favoriser notamment l'effet anti-solaire, par une coloration dans la masse du verre, on pourra monter jusqu'à une épaisseur de 1,5 mm de verre ou une face, qui sera celle montée du côté extérieur face au soleil de préférence, et obtenir le gain en poids, en n'ayant qu'un verre plus mince sur l'autre face, de 0,5 mm, voire moins, jusqu'à 1,2 mm. Tout vitrage selon l'invention, pour lequel la somme des épaisseurs de verre est inférieure à 3 mm apportera un gain de poids.

Ces vitrages seront notamment fabriqués par injection de la matière plastique dans un moule, dans lequel auront au préalable été disposées les deux feuilles de verre destinées à constituer les surfaces extérieures desdits vitrages. Les feuilles de verre étant maintenues en fond de moule, l'injection se fera entre lesdites deux feuilles de verre. Selon leur épaisseur, les deux feuilles de verre pourront soit être bombées préalablement à leur incorporation dans le moule quand il s'agira de réaliser des vitrages bombés, soit être disposées planes dans le moule et forcées à épouser les parois du moule, par exemple grâce à une dépression, leur forme courbe se maintenant quand le vitrage est fabriqué et que la matière plastique est refroidie et durcie et adhère solidement aux verres. Comme déjà dit, ces vitrages pourront incorporer des inserts, différentes épaisseurs de matières plastiques, chacune pouvant en outre apporter des fonctions supplémentaires, par exemple coloration, anti-rayonnement tel antisolaire, ....

## Revendications

1. Vitrage composite du type comprenant deux feuilles de verre et une couche intercalaire en matière plastique transparente de plus grande épaisseur que l'épaisseur des feuilles de verre, caractérisé en ce que la matière plastique est apte à adhérer au verre et en ce que le vitrage a une épaisseur totale inférieure à 5 mm, un rapport de l'épaisseur de la couche intercalaire à l'épaisseur des feuilles de verre compris entre 1 et 10, une masse surfacique inférieure à 6 kg/m² et un module de Young supérieur à 30 GPa pour une épaisseur totale de vitrage de 3 mm.

2. Vitrage composite selon la revendication 1, caractérisé en ce que la matière plastique est constituée par une résine ionomère, telle qu'un copolymère d'acide méthacrylique et de polyéthylène, ou bien un copolymère d'acide acrylique et d'éthylène neutralisé par une polyamine ou encore en polyuréthanne, en polyuréthanne thermoplastique, en téréphtalate de polyéthylène, en polyester ou en une résine acrylique ou acrylique modifiée.

3. Vitrage composite selon l'une des revendications 1 et 2, caractérisé en ce que l'adhésion entre verre et matière plastique est telle que la résistance à l'arrachement est au moins de 20 N/cm pour une bande de 1 cm de large, un promoteur d'adhérence étant si nécessaire déposé sur le verre ou introduit dans la matière plastique pour atteindre la valeur voulue.

4. A titre de produit industriel nouveau, ensemble incorporant un vitrage selon l'une des revendications 1 à 3, par exemple un hayon de véhicule ou une pièce de carosserie, ou un vitrage avec cadre ou rebords comprenant une zone transparente formée par le vitrage et une zone non transparente, par exemple peinte ou brute de moulage.

5. Ensemble selon la revendication 4, caractérisé en ce que ladite zone non transparente est réalisée dans la même matière plastique que celle entrant dans la composition de la zone transparente, ou en une matière plastique différente.

6. Ensemble selon l'une des revendications 4 et 5 caractérisé en ce qu'il est fabriqué au cours de la même opération de fabrication que celle qui permet de réaliser la couche intercalaire du vitrage, notamment une injection dans un moule,les feuilles de verre de surface de la zone transparente étant disposées en fonds de moule et l'injection de la matière plastique se faisant entre lesdites deux feuilles de verre.

7. Procédé de détermination des paramètres géométriques optima du vitrage composite selon l'une des revendications 1 à 6 et qui, à rigidité de flexion constante, a une masse surfacique inférieure à celle d'un vitrage monolithique d'épaisseur donnée, caractérisé en ce qu'il consiste :
- à sélectionner les matières plastiques dont le module de Young est au moins égal à 20MPa ;
- à réaliser pour chacune desdites matières plastiques un vitrage composite en plaçant, entre deux feuilles de verre pelliculaires ayant une première épaisseur donnée, une couche de ladite matière plastique d'épaisseur telle que la rigidité de flexion du vitrage obtenu soit égale à celle d'une feuille de verre monolithique ayant une épaisseur de réference donnée ;
- à mesurer la masse surfacique du vitrage composite ainsi obtenu ;
- à réaliser de la même façon avec ladite matière plastique des vitrages dont les feuilles de verre pelliculaires ont des épaisseurs croissantes ;
- à reporter sur un système de coordonnées les valeurs de la masse surfacique de chacun des vitrages en fonction de l'épaisseur des feuilles de verre pelliculaires ;
- et à relever le minima de la courbe (g, h) ainsi construite.

8. Procédé selon la revendication 7, caractérisé en ce que ladite épaisseur de référence de la feuille de verre monolithique est de 3 mm.

9. Vitrage, caractérisé en ce qu'il comprend deux feuilles de verre et une couche de matière intercalaire en une matière plastique ayant un module de Young au moins égal à 20MPa et en ce que le rapport entre l'épaisseur de la couche intercalaire et l'épaisseur des feuilles de verre est compris entre 1 et 10.

10. Vitrage selon la revendication 9, caractérisé en ce qu'il comprend deux feuilles de verre d'épaisseur totale inférieure à 3 mm.

11. Vitrage selon la revendication 10, caractérisé en ce que les épaisseurs de verre sont dissymétiques, l'une au moins étant inférieure à 1,2 mm.

12. Vitrage selon la revendication 9, caractérisé en ce qu'il comprend deux feuilles de verre ayant chacune une épaisseur de 0,5 ± 0,2 mm.

13. Vitrage selon la revendication 10, caractérisé en ce que les feuilles de verre pelliculaires ont chacune une épaisseur de 0,5 ± 0,1 mm.

14. Vitrage selon l'une des revendications 9 à 11, caractérisé en ce qu'il comprend une couche intercalaire appartenant au groupe : polyéthylène ionomère, polycarbonate, polyuréthanne.
